Europäisches Patentamt

European Patent Office

Office européen des brevets

(19)

(11) Publication number: **0 084 198**
A1

# EUROPEAN PATENT APPLICATION

(12)

(21) Application number: 82201669.7

(22) Date of filing: 29.12.82

(51) Int. Cl.³: **H 02 K 21/18**
H 02 K 19/06, H 02 K 17/04

(30) Priority: 11.01.82 NL 8200070

(43) Date of publication of application:
27.07.83 Bulletin 83/30

(84) Designated Contracting States:
DE FR GB

(71) Applicant: N.V. Philips' Gloeilampenfabrieken
Groenewoudseweg 1
NL-5621 BA Eindhoven(NL)

(72) Inventor: Dijken, Reinder Hendrik
c/o INT. OCTROOIBUREAU B.V. Prof. Holstlaan 6
NL-5656 AA Eindhoven(NL)

(72) Inventor: Lenting, Gerard Jozef
c/o INT. OCTROOIBUREAU B.V. Prof. Holstlaan 6
NL-5656 AA Eindhoven(NL)

(74) Representative: Schepens, Antonius Cornelis
Maria et al,
INTERNATIONAAL OCTROOIBUREAU B.V. Prof.
Holstlaan 6
NL-5656 AA Eindhoven(NL)

(54) Two-phase motor.

(57) The invention relates to a two-phase motor of the type in which the stator coils, (3, 4) do not surround the rotor (2) but are arranged as annular coils on substantially U-shaped yokes (9, 10, 11, 12). Both coils (3, 4) can be of a very compact construction because of the circumferentially numbered first (5), second (6), third (7) and fourth (8) stator poles, the first (5) and second (6) poles are connected to the third (7) and fourth (8) poles via a first coil (4) and the second (6) and third (7) poles are connected to the fourth (8) and first poles (5) via a second coil (3).

FIG.1

EP 0 084 198 A1

"Two-phase motor".

The invention relates to a two-phase motor having a stator and a rotor, provided with a first stator winding, a second stator winding and a stator body which comprises, viewed along the rotor circumference and in this order, first, second, third and fourth stator poles, and which also comprises first, second, third and fourth magnetically conductive portions which extend from the first, second, third and fourth stator poles, respectively, a first magnetically conductive circuit being formed which extends from the first and second stator poles to the third and fourth stator poles via the first and second portions, the first stator winding and the third and fourth portions, the first stator winding being arranged around a magnetically conducting connecting part which connects the first and second portions to the third and fourth portions and which extends in a first direction which is substantially transverse to the rotor axis.

Such a motor is known, for example from United States Patent Specification no. 3,052,806. In this motor a winding is arranged around both the first and fourth portions, which windings are electrically connected in series to form a second stator winding. The windings are arranged around those parts of the first and fourth portions which connect the first stator pole and the fourth stator pole to the second stator pole and the third stator pole respectively.

It is an object of the invention to provide a motor of the type set forth in the opening sentence, which is of a simple construction.

To this end the invention is characterized in that the second and third magnetically conductive portions extend at least partly directly adjacent each other and are both surrounded by the second stator winding both in a direction substantially transverse to the rotor axis and transverse to the first direction, so that a second magnetically conductive circuit being formed which extends from the second and third stator poles to the first and fourth stator poles <u>via</u> the second and third portions, the second stator winding and the first and fourth portions.

The invention will be described in more detail, by way of example, with reference to the drawings, in which

Figure 1 shows an embodiment of the invention in a sectional view taken in a plane perpendicular to the rotor axis,

Figure 2 is a sectional view of the motor shown in Figure 1 taken on the line II-II,

Figure 3 is a sectional view similar to that shown in Figure 1, showing the rotor-flux pattern for a first rotor position,

Figure 4 is a sectional view similar to that shown in Figure 1, showing the rotor-flux pattern for a different rotor position,

Figure 5 shows a variant of the embodiment shown in Figure 1, and

Figure 6 shows a variant of the motor shown in Figure 1, comprising a rotor having two pole pairs.

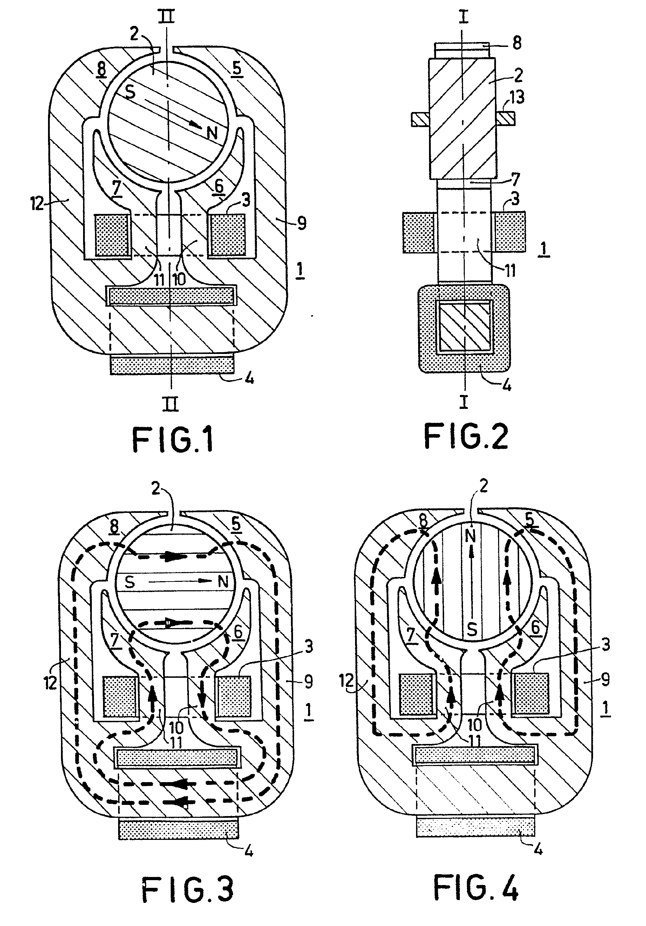

Figure 1 shows a motor in accordance with the invention in a sectional view taken in a plane perpendicular to the rotor axis (taken on the line I-I in Figure 2) and Figure 2 shows this motor in a sectional view taken in a plane containing the rotor axis (taken on the line II-II in Figure 1).

The motor comprises a permanent-magnetic rotor 2, which is magnetised so as to have two diametrically opposite poles (N, S). The stator 1 comprises four poles 5, 6, 7 and 8, which are arranged around the rotor and which each cover substantially 90° of the rotor circum-

ference. The stator body comprises four portions 9, 10, 11 and 12 which terminate in the stator poles 5, 6, 7 and 8, respectively. The portions 9 and 10 are connected to the portions 11 and 12 _via_ a first stator coil 4, a second stator coil 3 being arranged around the two portions 10 and 11.

The operation of the motor shown is explained with reference to Figures 3 and 4 which show the rotor-flux patterns for two rotor positions. In Figure 3 the rotor magnetisation is oriented from the poles 7 and 8 to the poles 5 and 6. The flux intercepted by the poles 5 and 6 flows _via_ the portions 9 and 10 through the stator coil 4 and _via_ the portions 11 and 12 to the poles 7 and 8. Inside the coil 3 the flux through the portion 10 is oriented oppositely to the flux through the portion 11. For this position of the rotor 2 the rotor flux is fully coupled to the coil 4 and is not coupled to the coil 3. After a rotation of the rotor through 90° the rotor 2 is oriented from poles 6 and 7 to poles 5 and 8. The flux intercepted by pole 5 flows _via_ portion 9 and portion 10 through coil 3 to the pole 6, and the flux intercepted by the pole 8 flows _via_ portion 12 and portion 11 through coil 3 to pole 7. No rotor flux is coupled to coil 4 because the rotor flux emerging from portion 9 is oriented oppositely to the rotor flux issuing from portion 12, the coupling of the rotor flux with the coil 3 being maximum. From the foregoing it follows that upon rotation of the rotor two 90° phase-shifted voltages are induced into the coils 3 and 4. Conversely, upon application of 90° phase-shifted alternating voltages to the coils 3 and 4 the rotor is set into rotation, which 90° phase-shifted alternating voltages can be derived from a single-phase alternating voltage by means of a capacitor. Thus, the motor in accordance with the invention operates as a two-phase motor and may be regarded as a motor having two stators which have been shifted through 90° relative to each other, a first stator having one pole formed by the poles 7 and 8 in combination and another pole formed by the poles 5 and 6 in combination, the poles thus formed cooperating with the coil 4, and a second stator having one pole which is formed by the poles 5 and 8 in combination and another pole formed by the poles 6 and 7 in combination, the poles thus formed cooperating with the coil 3.

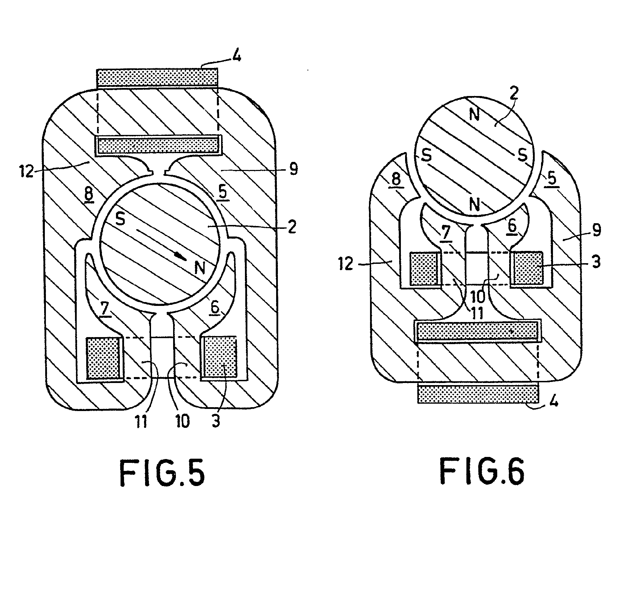

Many variants are possible to the embodiment shown in Figure 1. Figure 5 shows such a variant in which the coil 4 and the coil 3 are arranged on opposite sides of the rotor 2.

Figure 6 shows a variant in which the rotor has a four-pole magnetization and the four stator poles 5, 6, 7 and 8 are arranged along substantially 180° of the rotor circumference, each covering substantially 45°. When an alternating voltage of a given frequency is applied to it the rate of revolution of this variant will be half that of the motor shown in Figure 1 for the same applied frequency. The variant shown in Figure 6 may alternatively be of a symmetrical construction, i.e. having eight poles and four coils.

If in the motor described in the foregoing coil 3 were to be dispensed with and the portions 9 and 10 and stator poles 5 and 6 on the one hand and the portions 11 and 12 and stator poles 7 and 8 on the other hand were to be constructed as integral units, a known type of single-phase synchronous motor would be obtained. This clearly illustrates that the motor described in the foregoing demands hardly any more volume than the known single-phase synchronous motor.

Although the embodiments of the invention described in the foregoing comprise a permanent-magnetic rotor, so that the motor is a synchronous motor, the principle of the invention may also be used in asynchronous motors and in variable-reluctance motors.

CLAIMS

A two-phase motor having a stotor and a rotor, provided with a first stator winding, a second stator winding and a stator body which comprises, viewed along the rotor circumference and in this order, first, second, third and fourth stator poles, and which also comprises first, second, third and fourth magnetically conductive portions which extend from the first, second, third and fourth stator poles, respectively, a first magnetically conductive circuit being formed which extends from the first and second stator poles to the third and fourth stator poles _via_ the first and second portions, the first stator winding and the third and fourth portions, the first stator winding being arranged around a magnetically conductive connecting part which connects the first and second portions to the third and fourth portions and which extends in a first direction which is substantially transverse to the rotor axis, characterized in that the second and third magnetically conductive portions extend at least partly directly adjacent each other and are both surrounded by the second stator winding both in a direction substantially transverse to the rotor axis and transverse to the first direction, so that a second magnetically conductive circuit being formed which extends from the second and third stator poles to the first and fourth stator poles _via_ the second and third portions, the second stator winding and the first and fourth portions.

0084198

1/2

FIG.1

FIG.2

FIG.3

FIG. 4

1-II-PHN 10.231

0084198

FIG.5

FIG.6

2-II PHN 10.231

European Patent
Office

**EUROPEAN SEARCH REPORT**

Application number

EP 82 20 1669

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | FR-A-1 453 226 (HELD) * Page 6, left-hand column, lines 46-57; page 6, right-hand column, lines 1-21; page 9, left-hand column, lines 27-29; figure 31a * | 1 | H 02 K 21/18 H 02 K 19/06 H 02 K 17/04 |
| A | DE-A-1 955 689 (JULIEN & MEGE) * Page 3, lines 15-29; pages 4,5; figure * | 1 | |
| A | GB-A- 513 632 (BRITISH THOMSON-HOUSTON) * Page 1, lines 50-94; figure 1 * | 1 | |
| A,D | US-A-3 052 806 (ROYAL LEE) * Column 1, lines 22-72; column 2, lines 1-58; column 3, lines 24-75; column 4, lines 1-29; figures 1-3,5 * | 1 | TECHNICAL FIELDS SEARCHED (Int. Cl. ³) |
| A | DE-C- 844 027 (SIEMENS-SCHUCKERT) * Page 1, lines 24-34; page 2, lines 1-61; figure 1 * | 1 | H 02 K |

The present search report has been drawn up for all claims

| Place of search THE HAGUE | Date of completion of the search 12-04-1983 | Examiner TIO K.H. |
|---|---|---|